(19) Europäisches Patentamt
European Patent Office
Office européen des brevets

(11) **EP 3 839 153 B1**

(12) **EUROPÄISCHE PATENTSCHRIFT**

(45) Veröffentlichungstag und Bekanntmachung des Hinweises auf die Patenterteilung:
**15.02.2023 Patentblatt 2023/07**

(21) Anmeldenummer: **20213699.0**

(22) Anmeldetag: **14.12.2020**

(51) Internationale Patentklassifikation (IPC):
*E02F 9/26* (1968.09)  *F15B 15/28* (1985.01)
*F15B 19/00* (1968.09)  *G01D 18/00* (1968.09)
*G01D 5/244* (1968.09)

(52) Gemeinsame Patentklassifikation (CPC):
**G01D 18/006; E02F 9/2271; E02F 9/264;**
**F15B 15/2815; F15B 19/002; G01D 18/001;**
E02F 9/2214

(54) **VERFAHREN ZUR KALIBRIERUNG EINES LAGE-/POSITIONSSENSORS**

METHOD FOR CALIBRATING A POSITION SENSOR

PROCÉDÉ D'ÉTALONNAGE D'UN CAPTEUR DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2019 DE 102019219899**

(43) Veröffentlichungstag der Anmeldung:
**23.06.2021 Patentblatt 2021/25**

(73) Patentinhaber: **Robert Bosch GmbH**
**70442 Stuttgart (DE)**

(72) Erfinder:
• **Bender, Frank**
**70190 Stuttgart (DE)**
• **Weidler, Bernd**
**89346 Bibertal (DE)**

(56) Entgegenhaltungen:
WO-A1-2016/164976  DE-T5-112012 000 125
DE-T5-112015 000 031  DE-T5-112015 000 179
US-A1- 2014 326 039

EP 3 839 153 B1

**Beschreibung**

Die Erfindung betrifft ein Verfahren zur Kalibrierung eines Lage-/Positionssensors, mit dem die Lage-/Position einer Komponente der Ausrüstung einer mobilen Arbeitsmaschine erfassbar ist.

Aus der US 9 347 763 B2 ist es bekannt, bei einem Bagger zur Bestimmung der Winkelpositionen der einzelnen Ausrüstungskomponenten wie Ausleger, Stiel und Löffel relativ zueinander beziehungsweise relativ zum Oberwagen den Hydraulikzylindern, mit denen die einzelnen Teile gegeneinander bewegt werden, Positionssensoren für die Kolbenstangen zuzuordnen. Es ist auch denkbar, die Lage des Löffels relativ zum Stiel, die Lage des Stiels relativ zum Ausleger und die Lage des Auslegers relativ zum Oberwagen eines Baggers mit Winkelgebern zu erfassen. In der US 9 347 763 sind inkrementale Winkelgeber mit einem Referenzsignal vorgesehen.

Es ist bekannt, die an der Ausrüstung einer mobilen Arbeitsmaschine vorgesehenen Sensoren zur Lage-/Positionserfassung hinsichtlich ihrer Einbauposition mit Hilfe externer Referenzsignale (GPS, Wasserwaage) sozusagen offline zu kalibrieren. Dafür sind ein hoher Applikationsaufwand und ein hoher zeitlicher Aufwand verbunden. Dieser Aufwand kann reduziert werden, wenn die Sensoren online bei Inbetriebnahme und während des Betriebs der mobilen Arbeitsmaschine kalibriert werden können. Gemäß der US 9 347 763 ist eine solche Online- Kalibrierung für die Positionssensoren vorgesehen. Dazu ist die Ausrüstung des Baggers mit Drehgebern für die Winkellage des Auslegers relativ zum Oberwagen und für die Winkellage des Stiels relativ zu Ausleger sowie mit einem Magnetsensor am Löffelzylinder ausgestattet, mit deren Hilfe eine Referenzposition eines Hydrozylinders erfasst wird. Die Kalibrierung besteht dann darin, dass das Ausgangssignal, das der Positionssensor in der Referenzposition abgibt, der Referenzposition zugeordnet wird. Die Positions- oder Hubsensoren sind so ausgebildet, dass sie die lineare Bewegung der Kolbenstange eines Hydrozylinders in eine Drehbewegung umwandeln. Dazu umfasst ein Hubsensor eine Rolle, die auf der Oberfläche einer Kolbenstange aufliegt und eine Drehbewegung ausführt, wenn sich die Kolbenstange bewegt. Die Drehbewegung der Rolle wird auf einen Magnet übertragen, der einem Hallsensor gegenüberliegt, von dem eine Änderung des magnetischen Flusses während einer Drehung der Rolle erfasst und ein entsprechendes Signal abgegeben wird. Damit kann die Anzahl der Drehungen der Rolle und der Hub der Kolbenstange eines Hydrozylinders ermittelt werden.

In der US 9 347 763 B2 ist auch beschrieben, wie erkannt werden kann, dass ein Hydrozylinder der Ausrüstung eine Hubendposition erreicht hat. Dafür müssen nach der US 9 347 763 B2 drei Bedingungen erfüllt sein. Zunächst muss der Betätigungshebel eines Joysticks im Sinne einer Ansteuerung des Hydrozylinders ausgelenkt sein. Außerdem muss die von dem Positionssensor erfasste Hubposition innerhalb eines Abstandes von zum Beispiel 3 mm von der besagten Hubendposition liegen. Und schließlich muss die Bewegungsgeschwindigkeit des Kolbens und der Kolbenstange des Hydrozylinders kleiner als eine oder gleich einer Geschwindigkeit von zum Beispiel 3 mm/sec sein. Alternativ zu der Kalibrierung in einer mit Hilfe eines zusätzlichen Sensors erfassten Referenzposition kann ein die Hublänge erfassender Positionssensor auch in einer Hubendlage kalibriert werden.

DE 11 2015 000179 T5 offenbart eine Arbeitsmaschine und ein Verfahren zum Korrigieren eines Arbeitsausrüstungs-Parameters für eine Arbeitsmaschine.

Der Erfindung liegt die Aufgabe zugrunde, ein Verfahren für eine Online-Kalibrierung eines Lage-/Positionssensors an der Ausrüstung einer mobilen Arbeitsmaschine zu entwickeln, mit dem eine sehr genaue und zuverlässige Online-Kalibrierung eines Lage-/Positionssensors über dessen gesamte Lebensdauer möglich ist

Diese Aufgabe wird gelöst durch ein Verfahren mit folgenden Verfahrensschritten:

- Auswahl von wenigstens zwei Lagen/Positionen der Ausrüstungskomponente und Vorabbestimmung des Abstandes der wenigstens zwei Lagen/Positionen voneinander;

- von dem Lage-/Positionssensor unabhängige Erkennung der wenigstens zwei Lagen/Positionen der Ausrüstungskomponente;

- Ermittlung von Kalibrierparametern für den Lage-/Positionssensor aus den von dem Lage-/Positionssensor in den wenigstens zwei Lagen/Positionen der Ausrüstungskomponente abgegebenen Signalen und dem vorabbestimmten Abstand der wenigstens zwei Lagen/Positionen. Der Abstand kann der Abstand zweier Punkte im Raum oder auch ein Winkelabstand sein.

Gemäß dem erfindungsgemäßen Verfahren wird die Lage-/Position einer Ausrüstungskomponente nicht nur in einer, sondern in mindesten zwei Referenzpositionen unabhängig von dem Lage-/Positionssensor erkannt. Auf diese Weise können durch eine Kalibrierung nicht nur eine Änderung in der Lage des Sensors oder der Schlupf einer Rolle, sondern auch Veränderungen, die mit der Betriebsdauer einhergehen, ausgeglichen werden. Zum Beispiel kann bei einem Lage-/Positionssensor gemäß der der US 9 347 763 B2 eine Änderung im Radius der Rolle ausgeglichen werden. Bei einem Seilzuggeber mit Potentiometer kann eine Veränderung in der Gängigkeit und damit eine Veränderung in der Seildehnung ausgeglichen werden. Allgemein ausgedrückt können Veränderungen in der Steigung eines analogen Signals oder in der Anzahl, mit der ein digitales Signal über eine gewisse Hublänge oder über einen gewissen Winkel auftritt, bei der Kalibrierung berücksichtigt werden. Die durch eine Kalibrierung ermittelten Parameter umfassen also sowohl Parameter bezüglich der Einbausituation der Sensoren, zum Beispiel die genaue Position und Verkippung einer Inertialmesseinheit auf dem Ausleger, als auch Parameter zur Beschreibung des Ein-Ausgangsverhaltens, zum Beispiel die Übersetzung eines Winkels in eine elektrische Spannung.

Die Vorteile der Erfindung sind vor allem darin zu sehen, dass auf eine aufwändige Sensorkalibrierung im Werk verzichtet werden kann, dass die Inbetriebnahmezeit an der Arbeitsmaschine reduziert wird, dass Ungenauigkeiten beim Einbau der Sensoren und Alterungseffekte kompensiert werden. Die Kompensierung von Alterungseffekten ist vor allem bei teil- oder hochautomatisierten mobilen Arbeitsmaschinen von Vorteil, da der Bediener als Korrekturglied entfällt.

Das erfindungsgemäße Kalibrierverfahren lässt sich in vorteilhafter Weise ausgestalten.

Durch den Lage-/Positionssensor wird erfindungsgemäß die Lage/Position der Ausrüstungskomponente relativ zu einer anderen Ausrüstungskomponente oder relativ zur Arbeitsmaschine oder im Raum erfasst.

Vorteilhafterweise werden die von dem Lage-/Positionssensor abgegebenen Signale gefiltert.

Um den Einfluss des Rauschens und von Ausreißern in den erfassten Werten gering zu halten, ist es günstig, wenn die zur Kalibrierung von dem Lage-/Positionssensor in den wenigsten zwei Lagen/Positionen abgegebenen Signale über eine gewisse Zeit erfasst und gemittelt werden.

Die wenigsten zwei Lagen/Positionen der Ausrüstungskomponente können anhand des aktuellen Status der Arbeitsmaschine unterschieden werden. Das geschieht vorteilhafterweise ohne weitere Sensoren. Grundsätzlich können jedoch auch die Signale weiterer Sensoren herangezogen werden, um den aktuellen Maschinenstatus zu ermitteln.

Ist die Ausrüstungskomponente zwischen zwei Endlagen bewegbar, so ist es zweckmäßig, dass die erste Lage/Position, die unabhängig von dem Lage-/Positionssensor erkannt wird, die eine Endlage und die zweite Lage/Position, die unabhängig von dem Lage-/Positionssensor erkannt wird, die zweite Endlage der Ausrüstungskomponente ist und dass eine Endlage anhand eines Betätigungssignals zur Betätigung der Ausrüstungskomponente erfasst wird.

Eine Endlage der Ausrüstungskomponente kann anhand der Dauer, der Größe und einer Richtungskennung des Betätigungssignals erfasst werden.

Eine besonders einfache Umsetzung besteht darin, dass eine Endlage der Ausrüstungskomponente anhand eines Betätigungssignals erfasst wird, das über eine Dauer von mehr als 5 Sekunden größer ist als 50 Prozent der maximalen Größe eines Betätigungssignals. Dabei ist es möglich, eine Ausrüstungskomponente nach der anderen in einer Kalibrierfahrt von der einen Endlage unmittelbar in die andere Endlage zu bewegen. Eine Kalibrierung kann jedoch auch während des normalen Arbeitens stattfinden, da während des Betriebs auch immer wieder die Endlagen angefahren werden. Zum Beispiel wird von einem zur Erfassung des Hubes eines Hydrozylinders verwendeten Seilzuggeber mit einem Potentiometer ein hubabhängiges analoges Ausgangssignal in Form einer Spannung geliefert, aus der der Hub nach der Formel

$$Hub = m * Spannung + c$$

ermitteln lässt. Wenn der minimale Zylinderhub und der maximale Zylinderhub angefahren worden sind, liegt ein lineares Gleichungssystem mit zwei Gleichungen und zwei Unbekannten m und c vor, nach denen aufgelöst werden kann. Durch das weiter oben erwähnte Messen über einen längeren Zeitraum, ist das Gleichungssystem überbestimmt. Es können dann numerisch die Parameter, die den quadratischen Fehler im Mittel minimieren (least Squares Ansatz), ermittelt werden. Damit wird vermieden, dass durch Messrauschen verursachte Ausreißer die Parameter stark beeinflussen.

Der Lage-/Positionssensor kann ein Winkelsensor oder ein Wegsensor oder eine Inertialmesseinheit sein. Sind die zu kalibrierenden Sensoren Inertialmesseinheiten, so kann jeweils eine Inertialmesseinheit am Oberwagen, am Ausleger, am Stiel und am Löffel vorgesehen sein und der zu messende Winkel zwischen dem Oberwagen und dem Ausleger, zwischen dem Ausleger und dem Stiel sowie zwischen dem Stiel und dem Löffel beruht jeweils auf der Differenz der Lage zweier Inertialmesseinheiten. Damit ergibt sich für das Kalibrierverfahren die Besonderheit, dass die Inertialmesseinheiten ausgehend vom Oberwagen sequentiell kalibriert werden können. Allerdings gibt es für die erste Inertialmesseinheit am Oberwagen keine Referenz. Weil jedoch meist nur die Relativwinkel zwischen den Teilen relevant sind, kann man die Inertialmesseinheit am Oberwagen als korrekt messend annehmen. Kalibriert werden dann nach dem erfindungsgemäßen Verfahren der Reihe nach die Inertialmesseinheiten am Ausleger, am Stiel und am Löffel.

Die vorhandenen Signale, zum Beispiel die Signale eines den Zylinderhub erfassenden Sensors oder die Signale einer Inertialmesseinheit, die Ansteuersignale gemäß dem Bedienerwunsch, die von einem elektronischen Geber ausgegeben werden, und ein gewisses Vorwissen über die Kinematik und/oder Dynamik der Arbeitsmaschine lassen sich auch algorithmisch kombinieren. Zum Beispiel können die Werte gemäß einem als Kalman-Filter bekannten computerisierten statistisches Verfahren modellbasiert fusioniert und dann die Kalibrierungsparameter als Schätzgrößen ausgegeben werden.

Der integrative Ansatz erlaubt die Integration weiterer Sensorik mit mehr oder weniger bekanntem Übertragungsverhalten. Denkbare weitere Sensoren umfassen Drucksensoren, Kraftmessbolzen, Lasersensoren, Radar, Ultraschall, Kamerasysteme.

Ein Bagger und ein Ablaufdiagramm eines erfindungsgemäßen Verfahrens sind in den Zeichnungen dargestellt. Anhand dieser Zeichnungen wird die Erfindung nun näher erläutert.

Es zeigen

Figur 1 den Bagger und
Figur 2 in schematischer Weise das Verfahren zur Sensorkalibrierung.

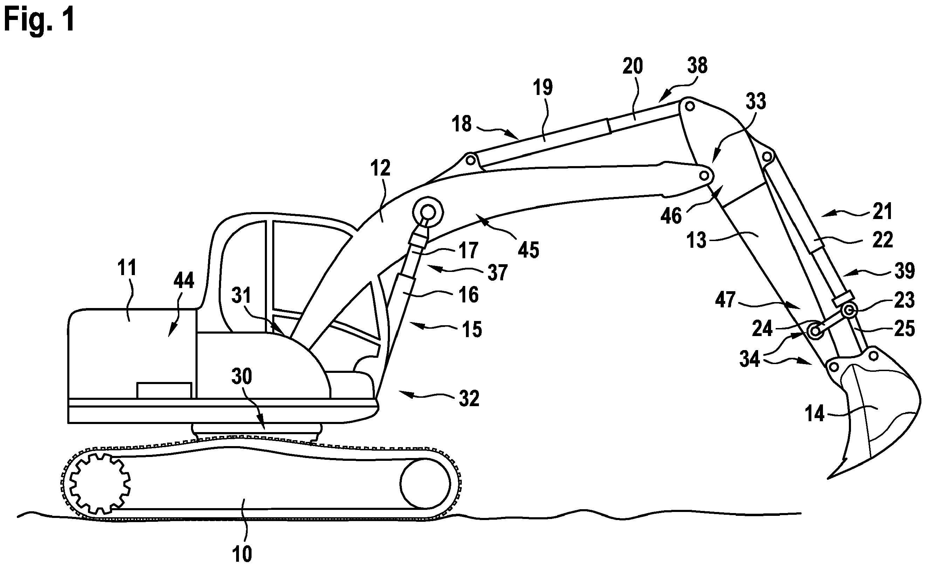

Der Bagger gemäß Figur 1 besitzt einen Unterwagen 10 mit einem Raupenfahrwerk und einen Oberwagen 11, der gegenüber dem Unterwagen 10 um eine zur Aufstandsfläche des Unterwagens senkrechte Achse drehbar ist. Die Arbeitsausrüstung des Baggers ist ein mehrgliedriger Baggerarm mit einem Ausleger 12, einem Stiel 13 und einem Löffel 14 als Ausrüstungskomponenten. Der Ausleger 12 ist am Oberwagen 11 um eine Achse drehbar befestigt und über zwei parallel zueinander angeordnete hydraulische Auslegerzylinder 15 betätigbar, die mit ihrem Zylindergehäuse 16 um eine erste gemeinsame Achse drehbar am Oberwagen und mit ihrer Kolbenstange 17 über eine zweite gemeinsame Achse drehbar am Ausleger befestigt sind. Die gemeinsame Achse der beiden Auslegerzylinder am Oberwagen verläuft parallel zur Achse des Auslegers und im Abstand parallel zu dieser.

Der Stiel 13 ist drehbar am distalen Ende des Auslegers 12 an diesem drehbar befestigt, wobei die Drehachse zwischen dem Stiel und dem Ausleger parallel zu der Drehachse zwischen dem Ausleger und dem Oberwagen verläuft. Über einen Stielzylinder 18, der mit seinem Zylindergehäuse 19 drehbar am Ausleger und mit seiner Kolbenstange 20 im Abstand zu der Drehachse zwischen dem Stiel und dem Ausleger drehbar am Stiel befestigt ist, ist der Stiel gegenüber dem Ausleger verschwenkbar.

Der Löffel 14 ist um eine Achse drehbar an dem einen Ende des Stiel 13 befestigt und über einen Löffelzylinder 21, der mit seinem Zylindergehäuse 22 drehbar am Stiel 13 befestigt ist, gegenüber dem Stiel 13 verschwenkbar. Die Kolbenstange 23 des Löffelzylinders 22 ist drehbar an ein Gelenkviereck angelenkt, das umfasst ein Glied, das durch einen Abschnitt des Stiels 13 gebildet wird, ein Glied, das durch einen Abschnitt des Löffels 14 gebildet wird, ein Glied 24, das am Stiel angelenkt ist, und ein Glied 25, das am Löffel angelenkt ist. Die Kolbenstange 23 des Löffelzylinders ist an dem Gelenk zwischen den beiden zuletzt genannten Gliedern 24 und 25 an das Gelenkviereck angelenkt. Alle Drehachsen zwischen Löffel und Stiel verlaufen parallel zueinander und zu den anderen Drehachsen der Ausrüstung.

Gemäß Figur 1 ist der Bagger mit einer Reihe von Lage-/Positionssensoren ausgestattet, mit denen die Bewegung der Ausrüstung und insbesondere die Position des Löffels 14 relativ zum Unterwagen 10 erfasst werden soll. Im konkreten Fall sind nicht unbedingt alle in der Figur 1 angeführten Sensoren vorhanden. Vielmehr wird sich die Art und die Anzahl der vorhandenen Sensoren nach den Wünschen des Benutzers und nach den Erfordernissen des Einsatzfalles richten.

Es kann ein Encoder 30 vorhanden sein, mit dem die Winkelposition zwischen dem Unterwagen 10 und dem Oberwagen 11 erfassbar ist. Es kann ein Encoder 31 vorhanden sein, mit dem die Winkelposition zwischen dem Oberwagen 11 und dem Ausleger 12 erfassbar ist. Es kann ein Encoder 32 vorhanden sein, mit dem die Winkelposition zwischen dem Oberwagen 11 und dem Auslegerzylinder15 erfassbar ist. Es kann ein Encoder 33 vorhanden sein, mit dem die Winkelposition zwischen dem Stiel 13 und dem Ausleger 12 erfassbar ist. Es kann ein Encoder 34 vorhanden sein, mit dem die Winkelposition zwischen dem Löffel 14 und dem Stiel 13 erfassbar ist. Dieser Encoder 34 kann dafür vorgesehen sein, um entweder die Winkelposition im Gelenk zwischen dem Löffel 14 und dem Stiel 13 oder die Winkelposition zwischen dem Gelenkglied 24 und dem Stiel zu erfassen.

Es kann ein Hubsensor 37 vorhanden sein, mit dem der Hub des Auslegerzylinders 15 erfassbar ist. Es kann ein Hubsensor 38 vorhanden sein, mit dem der Hub des Stielzylinders 18 erfassbar ist. Es kann ein Hubsensor 39 vorhanden sein, mit dem der Hub des Löffelzylinders 21 erfassbar ist. Die Hubsensoren können als Seilzuggeber ausgebildet sein, die ein Sensorelement, zum Beispiel ein Potentiometer oder einen Encoder, enthalten, das eine Wegänderung in ein proportionales oder ein inkrementelles oder absolutes digitales elektrisches Signal wandelt.

Am Oberwagen 11 kann eine Inertialmesseinheit (IMU) 44 angebracht sein, mit der die Beschleunigung und die Winkelgeschwindigkeit des Oberwagens erfasst werden können. Am Ausleger 12 kann eine Inertialmesseinheit (IMU) 45 angebracht sein, mit der die Beschleunigung und die Winkelgeschwindigkeit des Auslegers 12 erfasst werden können. Am Stiel 13 kann eine Inertialmesseinheit 46 angebracht sein, mit der die Beschleunigung und die Winkelgeschwindigkeit des Stiels 13 erfasst werden können. Am Gelenkglied 24 kann eine Inertialmesseinheit 47 angebracht sein, mit der die Beschleunigung und die Winkelgeschwindigkeit des Löffels 14 erfasst werden können.

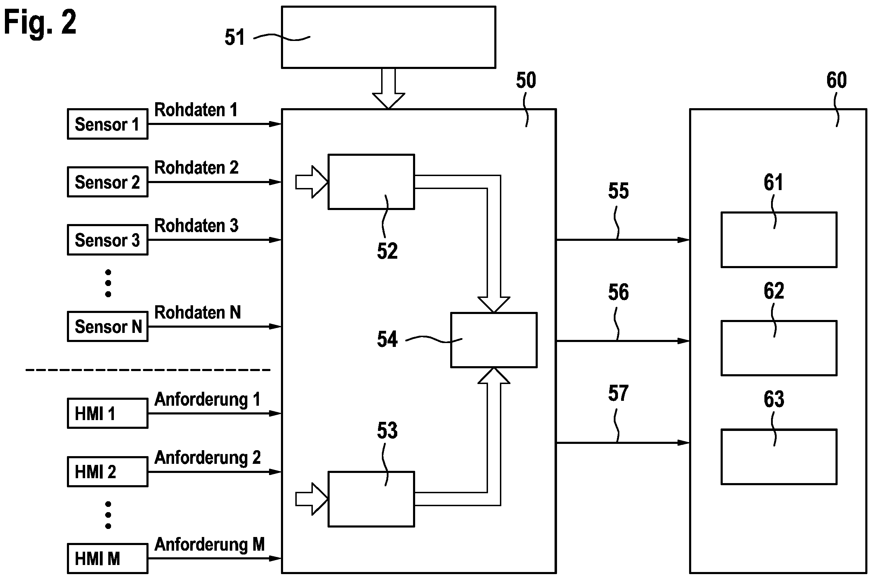

Gemäß Figur 2 läuft die Kalibrierung eines Sensors in einem entsprechend programmierten Rechner 50 ab. Diesem werden die rohen Ausgangsdaten einer Vielzahl von Sensoren 1 bis N zugeführt. Außerdem erhält der Rechner Signale von verschiedenen Mensch-Maschinen-Schnittstellen HMI 1 bis HMI M, die bestimmten Antriebsanforderungen 1 bis M für die verschiedenen Antriebe der Ausrüstungskomponenten und des Oberwagens beinhalten und bei dem Bagger nach Figur 2 zu Drehbewegungen führen. Die Mensch-Maschine-Schnittstellen können zum Beispiel durch zwei elektronische Joystick realisiert sein, mit deren Betätigungshebel sich jeweils zwei der an dem Bagger nach Figur 2 vorhandenen hydraulischen Antriebe für die Ausrüstung und den Oberwagen steuern lassen.

In den Rechner 50 sind außerdem bekannte Maschinenparameter wie zum Beispiel die Kinematik, die maximalen Zylinderhübe, Massen und Trägheitsmomente eingegeben. Dies ist in Figur 2 durch den Block 51 und dem von diesem zum Rechner 50 weisenden Pfeil symbolisiert. Innerhalb des Rechners 50 werden in einer Teilfunktion 52 die von den Sensoren 1 bis N kommenden Signale gefiltert und verarbeitet. In einer Teilfunktion 53 wird aus den Signalen Antriebsanforderung 1 bis M der Mensch-Maschinen-Schnittstellen HMI 1 bis HMI M der aktuelle Maschinestatus wie zum Beispiel "in Ruhe", "Ausleger hebt sich", usw. ermittelt. In einem Algorithmus 54 des Rechners 50 erfolgt dann die Kalibrierung eines Sensors. Der Algorithmus nutzt die vorab bekannten Maschinenparameter, die gefilterten und bearbeiteten Sensor-Rohdaten, die von den Mensch-Maschinen-Schnittstellen ausgegebenen Antriebsanforderungen sowie den aktuellen Maschinenstatus, um die Werte für die einzustellenden oder anzupassenden Parameter der Sensoren zu ermitteln und damit die Sensoren zu kalibrieren.

Eine einfache Umsetzung, um festzustellen, ob einer der Hydrozylinder 15, 18 oder 21 den minimalen oder den maximalen Zylinderhub erreicht hat, besteht in folgender Vorschrift:

Wenn der Joystick für den entsprechenden Hydrozylinder für mehr als 5 Sekunden mehr als 50 Prozent ausgelenkt ist, dann befindet sich der Hydrozylinder je nach Auslenkrichtung des Joysticks beim minimalen Zylinderhub oder beim maximalen Zylinderhub. Dabei sind eine Dauer von 5 Sekunden und eine Auslenkung von 50 Prozent sicherlich für eine Reihe von Maschinen zutreffend. Die Werte sind jedoch hier beispielhaft genannt und maschinenspezifisch.

Von dem Rechner 50 werden die Ausgangssignale der kalibrierten Sensoren, wie durch den Pfeil 55 angedeutet ist, Informationen über die Sensorbefestigung, wie durch den Pfeil 56 angedeutet ist, und Informationen zum Sensorstatus, wie durch den Pfeil 57 angedeutet ist, an ein elektronisches Steuersystem 60 übertragen, das eine Teilfunktion 61 zur Prozesssteuerung, eine Teilfunktion 62 zur Maschinensteuerung und eine Teilfunktion 63 zur Komponentensteuerung enthält.

Bezugszeichenliste

| 10 | Unterwagen |
| 11 | Oberwagen |
| 12 | Ausleger |
| 13 | Stiel |
| 14 | Löffel |
| 15 | Auslegerzylinder |
| 16 | Zylindergehäuse von 15 |
| 17 | Kolbenstange von 15 |
| 18 | Stielzylinder |
| 19 | Zylindergehäuse von 18 |
| 20 | Kolbenstange von 18 |
| 21 | Löffelzylinder |
| 22 | Zylindergehäuse von 21 |
| 23 | Kolbenstange von 21 |
| 24 | Gelenkglied |
| 25 | Gelenkglied |
| 30 | Encoder |
| 31 | Encoder |
| 32 | Encoder |
| 33 | Encoder |
| 37 | Hubsensor |
| 38 | Hubsensor |
| 39 | Hubsensor |
| 44 | Inertialmesseinheit |
| 45 | Inertialmesseinheit |
| 46 | Inertialmesseinheit |
| 47 | Inertialmesseinheit |
| 50 | Rechner |
| 51 | Block |
| 52 | Teilfunktion in 50 |
| 53 | Teilfunktion in 50 |
| 54 | Algorithmus in 50 |
| 55 | Pfeil als Symbol für Übertragung von Daten |
| 56 | Pfeil als Symbol für Übertragung von Daten |
| 57 | Pfeil als Symbol für Übertragung von Daten |
| 60 | elektronisches Steuersystem |
| 61 | Teilfunktion von 60 |
| 62 | Teilfunktion von 60 |
| 63 | Teilfunktion von 60 |

Patentansprüche

1. Verfahren zur Kalibrierung eines Lage-/Positionssensors (30, 31, 32, 33, 34, 37, 38, 39, 45, 46, 47), mit dem die Lage-/Position einer Ausrüstungskomponente (12, 13, 14) einer mobilen Arbeitsmaschine erfassbar ist, wobei durch den Lage-/Positionssensor die Lage/Position der Ausrüstungskomponente (12, 13, 14) relativ zu einer anderen Ausrüstungskomponente (12, 13, 14) oder relativ zur Arbeitsmaschine erfasst wird, mit folgenden Verfahrensschritten:

- Auswahl von wenigstens zwei Lagen/Positionen der Ausrüstungskomponente (12, 13, 14) und Vorabbestimmung des Abstandes der wenigstens zwei Lagen/Positionen der Ausrüstungskomponente (12, 13, 14) voneinander;
- durch den Lage-/Positionssensor (30, 31, 32, 33, 34, 37, 38, 39, 45, 46, 47) unabhängige Erkennung der wenigstens zwei Lagen/Positionen der Ausrüstungskomponente (12, 13, 14);
- Ermittlung von Kalibrierparametern für den Lage-/Positionssensor (30, 31, 32, 33, 34, 37, 38, 39, 45, 46, 47) aus den von dem Lage-/Positionssensor in den wenigstens zwei Lagen/Positionen der Ausrüstungskomponente (12, 13,14) abgegebenen Signalen und dem vorabbestimmten Abstand der wenigstens zwei Lagen/Positionen.

**2.** Verfahren nach Patentanspruch 1, wobei die von dem Lage-/Positionssensor (30, 31, 32, 33, 34, 37, 38, 39, 45, 46, 47) abgegebenen Signale gefiltert werden.

**3.** Verfahren nach einem vorhergehenden Patentanspruch, wobei die von dem Lage-/Positionssensor (30, 31, 32, 33, 34, 37, 38, 39, 45, 46, 47) in den wenigsten zwei Lagen/Positionen abgegebenen Signale über eine gewisse Zeit gemittelt werden.

**4.** Verfahren nach einem vorhergehenden Patentanspruch, wobei die wenigsten zwei Lagen/Positionen der Ausrüstungskomponente (12, 13, 14) anhand des aktuellen Status der Arbeitsmaschine unterschieden werden.

**5.** Verfahren nach Patentanspruch 4, wobei die Ausrüstungskomponente (12, 13, 14) zwischen zwei Endlagen bewegbar ist, wobei eine erste Lage/Position die eine Endlage und eine zweite Lage/Position die zweite Endlage der Ausrüstungskomponente (12, 13, 14) ist und wobei eine Endlage anhand eines Betätigungssignals zur Betätigung der Ausrüstungskomponente (12, 13, 14) erfasst wird.

**6.** Verfahren nach Patentanspruch 5, wobei eine Endlage der Ausrüstungskomponente (12, 13, 14) anhand der Dauer, der Größe und einer Richtungskennung des Betätigungssignals erfasst wird.

**7.** Verfahren nach Patentanspruch 6, wobei eine Endlage der Ausrüstungskomponente (12, 13, 14) anhand eines Betätigungssignals erfasst wird, das über eine Dauer von mehr als 5 Sekunden größer ist als 50 Prozent der maximalen Größe eines Betätigungssignals.

**8.** Verfahren nach einem vorhergehenden Patentanspruch, wobei der Lage-/Positionssensor ein Winkelsensor (30, 31, 32, 33, 34) oder ein Wegsensor (37, 38, 39) oder eine Inertialmesseinheit (45, 46, 47) ist.

**9.** Verfahren nach einem vorhergehenden Patentanspruch, wobei zur Kalibrierung vom Sensor abgegebenen Signale, Ansteuersignale gemäß einem Bedienerwunsch und ein Vorwissen über die Kinematik und/oder Dynamik der Arbeitsmaschine algorithmisch kombiniert werden.

**10.** Verfahren nach Patentanspruch 9, wobei die algorithmische Kombination über ein Kalmanfilter stattfindet, das die Werte modellbasiert fusioniert und als Schätzgröße die Kalibrierungsparameter ausgibt.

## Claims

**1.** Method for calibrating a position sensor (30, 31, 32, 33, 34, 37, 38, 39, 45, 46, 47) that can be used to detect the position of an equipment component (12, 13, 14) of a mobile working machine, the position sensor detecting the position of the equipment component (12, 13, 14) relative to another equipment component (12, 13, 14) or relative to the working machine, having the following method steps:

- selecting at least two positions of the equipment component (12, 13, 14) and preliminarily determining the distance of the at least two positions of the equipment component (12, 13, 14) from one another;
- the position sensor (30, 31, 32, 33, 34, 37, 38, 39, 45, 46, 47) independently identifying the at least two positions of the equipment component (12, 13, 14);
- ascertaining calibration parameters for the position sensor (30, 31, 32, 33, 34, 37, 38, 39, 45, 46, 47) from the signals delivered by the position sensor in the at least two positions of the equipment component (12, 13, 14) and the preliminarily determined distance between the at least two positions.

**2.** Method according to Patent Claim 1, wherein the signals delivered by the position sensor (30, 31, 32, 33, 34, 37, 38, 39, 45, 46, 47) are filtered.

**3.** Method according to a preceding patent claim, wherein the signals delivered by the position sensor (30, 31, 32, 33, 34, 37, 38, 39, 45, 46, 47) in the at least two positions are averaged over a certain time.

**4.** Method according to a preceding patent claim, wherein a distinction is drawn between the at least two positions of the equipment component (12, 13, 14) on the basis of the present status of the working machine.

**5.** Method according to Patent Claim 4, wherein the equipment component (12, 13, 14) can be moved between two end positions, wherein a first position is one end position and a second position is the second end position of the equipment component (12, 13, 14) and wherein an end position is detected on the basis of an operating signal for operating the equipment component (12, 13, 14).

**6.** Method according to Patent Claim 5, wherein an end position of the equipment component (12, 13, 14) is detected on the basis of the duration, the magnitude and a directional identifier of the operating signal.

**7.** Method according to Patent Claim 6, wherein an end position of the equipment component (12, 13, 14) is detected on the basis of an operating signal that is greater than 50 per cent of the maximum magnitude of an operating signal over a period of more than 5 seconds.

8. Method according to a preceding patent claim, wherein the position sensor is an angle sensor (30, 31, 32, 33, 34) or a displacement sensor (37, 38, 39) or an inertial measurement unit (45, 46, 47).

9. Method according to a preceding patent claim, wherein calibration involves signals delivered by the sensor, actuation signals based on a user requirement and prior knowledge about the kinematics and/or dynamics of the working machine being algorithmically combined.

10. Method according to Patent Claim 9, wherein the algorithmic combination takes place by way of a Kalman filter that fusions the values in a model-based manner and outputs the calibration parameters as an estimated variable.

**Revendications**

1. Procédé permettant d'étalonner un capteur de position (30, 31, 32, 33, 34, 37, 38, 39, 45, 46, 47) qui permet de détecter la position d'un équipement (12, 13, 14) d'une machine de travail mobile, dans lequel le capteur de position détecte la position de l'équipement (12, 13, 14) par rapport à un autre équipement (12, 13, 14) ou par rapport à la machine de travail, comprenant les étapes de procédé suivantes consistant à :

- sélectionner au moins deux positions de l'équipement (12, 13, 14) et prédéterminer la distance des au moins deux positions de l'équipement (12, 13, 14) l'une par rapport à l'autre ;
- par le capteur de position (30, 31, 32, 33, 34, 37, 38, 39, 45, 46, 47), identifier indépendamment les au moins deux positions de l'équipement (12, 13, 14) ;
- établir des paramètres d'étalonnage pour le capteur de position (30, 31, 32, 33, 34, 37, 38, 39, 45, 46, 47) à partir des signaux émis par le capteur de position dans les au moins deux positions de l'équipement (12, 13, 14) et de la distance prédéterminée des au moins deux positions.

2. Procédé selon la revendication 1, dans lequel les signaux émis par le capteur de position (30, 31, 32, 33, 34, 37, 38, 39, 45, 46, 47) sont filtrés.

3. Procédé selon une revendication précédente, dans lequel les signaux émis par le capteur de position (30, 31, 32, 33, 34, 37, 38, 39, 45, 46, 47) dans les au moins deux positions sont moyennés pendant un certain temps.

4. Procédé selon une revendication précédente, dans lequel les au moins deux positions de l'équipement (12, 13, 14) sont distinguées à l'aide de l'état actuel de la machine de travail.

5. Procédé selon la revendication 4, dans lequel l'équipement (12, 13, 14) peut être déplacé entre deux positions d'extrémité, dans lequel une première position est ladite première position d'extrémité et une deuxième position est la deuxième position d'extrémité de l'équipement (12, 13, 14), et dans lequel une position d'extrémité est détectée à l'aide d'un signal d'actionnement pour actionner l'équipement (12, 13, 14).

6. Procédé selon la revendication 5, dans lequel une position d'extrémité de l'équipement (12, 13, 14) est détectée à l'aide de la durée, de la grandeur et d'une reconnaissance de direction du signal d'actionnement.

7. Procédé selon la revendication 6, dans lequel une position d'extrémité de l'équipement (12, 13, 14) est détectée à l'aide d'un signal d'actionnement qui, pendant une durée de plus de 5 secondes, est supérieur à 50 % de la grandeur maximale d'un signal d'actionnement.

8. Procédé selon une revendication précédente, dans lequel le capteur de position est un capteur d'angle (30, 31, 32, 33, 34) ou un capteur de déplacement (37, 38, 39) ou une unité de mesure inertielle (45, 46, 47).

9. Procédé selon une revendication précédente, dans lequel des signaux émis par le capteur pour l'étalonnage sont combinés par algorithme selon un souhait d'utilisateur et une connaissance préalable concernant la cinématique et/ou la dynamique de la machine de travail.

10. Procédé selon la revendication 9, dans lequel la combinaison algorithmique a lieu par l'intermédiaire d'un filtre de Kalman qui fusionne les valeurs sur la base d'un modèle et émet les paramètres d'étalonnage sous forme de grandeur estimée.

**Fig. 1**

EP 3 839 153 B1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 9347763 B2
- US 9347763 B

- DE 112015000179 T5